# EUROPÄISCHE PATENTSCHRIFT

(11) **EP 2 139 017 B1**
(45) Veröffentlichungstag und Bekanntmachung des Hinweises auf die Patenterteilung: **31.12.2014**
(21) Anmeldenummer: 08158751.1
(22) Anmeldetag: 23.06.2008
(51) Int. Cl.: H01H 71/02, F16B 21/08, F16B 5/06, H02B 1/04

(54) **Verbindungselement für Installationsgeräte, insbesondere für Niederspannungsschaltgeräte**
Connecting element for installation devices, in particular for low voltage switching devices
Elément de liaison pour appareils d'installation, en particulier pour commutateurs basse tension

(43) Veröffentlichungstag der Anmeldung: 30.12.2009
(73) Patentinhaber: ABB Schweiz AG, 5400 Baden (CH)
(72) Erfinder: Pfister, Juerg, CH-8245, Feuerthalen (CH); Kuttruff, Eric, D-79843, Löffingen-Bachheim (DE)
(74) Vertreter: ABB Patent Attorneys

(56) Entgegenhaltungen:
- EP-A- 1 109 277
- EP-A- 1 400 641
- DE-A1- 4 423 382
- DE-A1-102004 042 428
- DE-U1- 8 322 594
- US-A- 2 885 822
- US-A- 4 524 494

## Beschreibung

### Technisches Gebiet

Die Erfindung bezieht sich auf das Gebiet von Verbindungselementen zum mechanischen Verbinden zweier oder mehrerer Installationsgeräte, insbesondere Niederspannungsschaltgeräte bis 1000 V wie Reiheneinbaugeräte, Leitungsschutzschalter, Fehlerstromschutzschalter, Relais, Ein- und Ausschalter, Signalapparate oder Steuerschalter. Die Erfindung bezieht sich insbesondere auf ein Verbindungselement gemäss dem Oberbegriff von Anspruch 1 und auf Installationsgeräte gemäss dem Oberbegriff von Anspruch 9.

### Stand der Technik

Derartige Verbindungselemente sind im Stand der Technik bekannt. EP 1 109 277 A2 offenbart ein derartiges Verbindungselement zum Verbinden zweier nebeneinander gereihter Installationsgeräte. Dieses bekannte Verbindungselement weist einen etwa zylinderförmigen Grundkörper mit einem ersten Aussendurchmesser auf, an dem beidseitig je zwei radial auffedernde, axial in entgegen gesetzten Richtungen vorspringende Spreizarme angeformt sind. Zum Einsetzen der Verbindungselemente in eines der miteinander zu verbindenden Installationsgeräte ist es notwendig, die Spreizarme radial zusammen zu drücken, sodass die Spreizarme in eine dafür vorgesehene Aufnahmeöffnung am Gehäuse des Installationsgerätes eingeführt werden können. Nach dem Einführung spreizen sich die Spreizarme wieder radial auf, sodass Einrastnasen an jedem Spreizarm hinter entsprechende Rücksprüngen am Gehäuse des Installationsgerätes eingreifen können. Damit die Verbindungselemente die Installationsgeräte zuverlässig miteinander verbinden, ist es notwendig, dass die Spreizarme nur unter Überwindung einer grossen Kraft radial zusammendrückbar sind, das heisst, dass die Elastizität der Spreizarme beziehungsweise des Verbindungselements nicht gross ist. Mit anderen Worten, das Verbindungselement muss relative steif sein, damit mittels der bekannten Verbindungselemente Installationsgeräte zuverlässig miteinander verbunden werden können. Die Steifigkeit der Verbindungselemente erschwert jedoch die Montage, insbesondere sind die relativ kleinen, steifen Verbindungselemente während des Einsetzens in das erste der beiden miteinander zu verbindenden Installationsgeräte schlecht handhabbar.

Aus US 4 524,494 ist ein Befestigungselement für ein Automobil bekannt, welches derart ausgebildet ist, dass mithilfe des Befestigungselements ein Gegenstand an dem Automobil befestigt wird. Das Befestigungselement wird von einer Seite her durch Einführen eines Schraubendrehers gelöst.

### Kurze Darstellung der Erfindung

Die Aufgabe der Erfindung besteht darin, ein Verbindungselement zu schaffen, welches in einfacher Art und Weise an einem Installationsgerät montierbar ist, wobei die mittels der Verbindungselemente zu verbindenden Installationsgeräte zuverlässig miteinander verbunden werden.

Die obige Aufgabe wird erfindungsgemäss durch ein Verbindungselement mit den Merkmalen des Anspruchs 1 gelöst.

Erfindungsgemäss weist des Verbindungselement ein Gelenk in Form eines Scharniers auf. Dieses Gelenk ermöglicht in vorteilhafter Weise, dass das erfindungsgemässe Verbindungselement unter einem minimalen Kraftaufwand in das erste der beiden miteinander zu verbindenden Installationsgeräte eingesetzt werden kann und somit von Hand in einfacher Art und Weise am ersten Installationsgerät montierbar ist. Nach dem Einsetzen der Verbindungselemente in dafür vorgesehene Öffnungen am ersten Installationsgerät kann das zweite der beiden zu verbindenden Installationsgeräte an das erste Installationsgeräte gedrückt werden. Durch das Aneinanderdrücken der beiden Installationsgeräte kann der zu diesem Vorgang notwendige Kraftaufwand, der im Vergleich zum Kraftaufwand zum Einsetzen des Verbindungselements in das erste Installationsgerät gross ist, problemlos gehandhabt werden.

Bevorzugte Ausführungsformen und Vorteile gehen aus den abhängigen Patentansprüchen und den Figuren hervor.

### Kurze Beschreibung der Zeichnungen

Im folgenden wird der Erfindungsgegenstand anhand von bevorzugten Ausführungsbeispielen näher erläutert, welche in den beiliegenden Figuren dargestellt sind. Es zeigen rein schematisch:
- Fig. 1: in perspektivischer Darstellung ein erfindungsgemässes Verbindungselement;
- Fig. 2: das erfindungsgemässe Verbindungselement gemäss in Seitenansicht;
- Fig. 3: das erfindungsgemässe Verbindungselement in Seitenansicht zum Zeitpunkt des Einsetzens in ein Gehäuse eines ersten Installationsgerätes, wobei das Gehäuse im Schnitt dargestellt ist;
- Fig. 4: in perspektivischer Darstellung das Installationsgerät mit zwei eingesetzten erfindungsgemässen Verbindungselementen; und
- Fig. 5: das erfindungsgemässe Verbindungselement in Seitenansicht zum Zeitpunkt in welchem das Verbindungselement in das Gehäuse des ersten miteinander zu verbindenden Installationsgerätes eingesetzt ist und das Verbindungselement in ein Gehäuse des zweiten Installationsgerätes eingesetzt wird, wobei die beiden Gehäuse im Schnitt dargestellt sind; und
- Fig. 6: das in die Gehäuse des ersten und zweiten Installationsgerätes eingesetzte Verbindungselement.

### Weg zur Ausführung der Erfindung

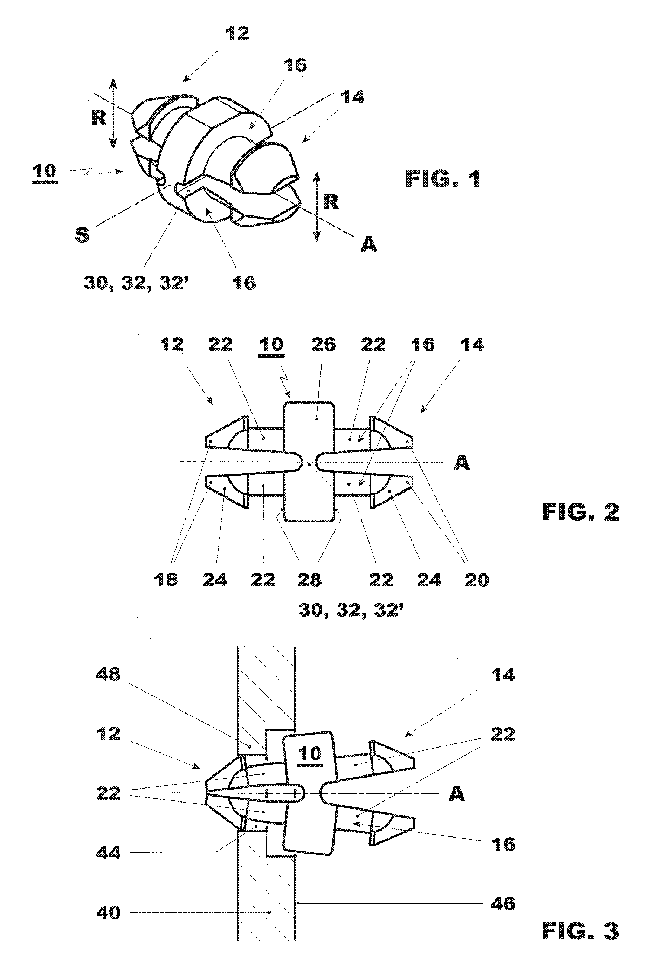

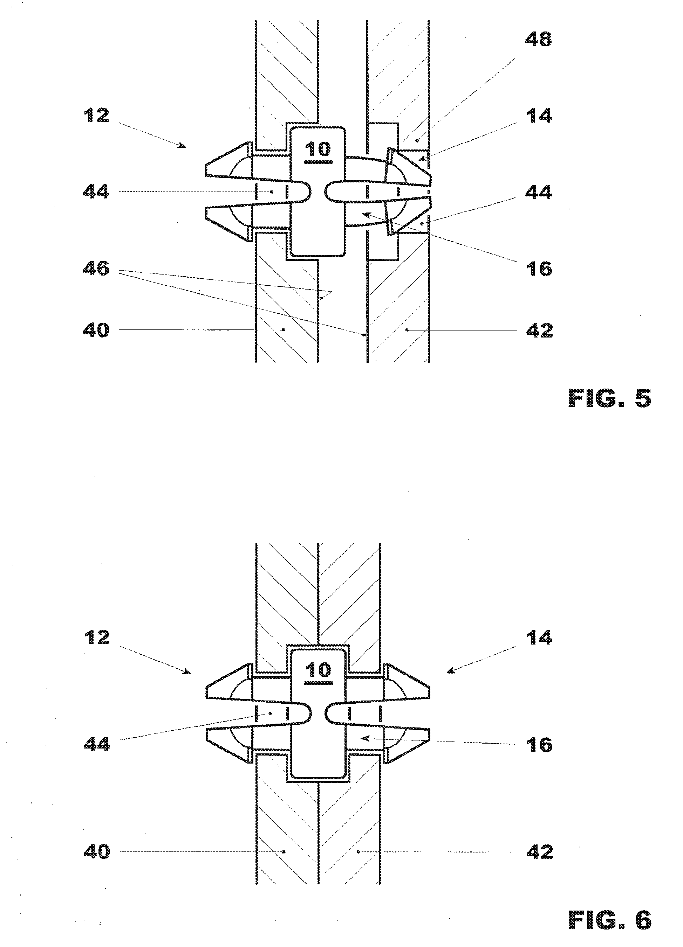

Ein erstes Ausführungsbeispiel eines erfindungsgemässen Verbindungselements 10 ist in den Fig. 1-6 gezeigt. Das sich in Axialrichtung A erstreckende Verbindungselement 10 weist jeweils in Axialrichtung A endseitig je eine Einrastgruppe 12, 14 auf. Wie insbesondere in Fig. 2 gezeigt, werden die zwei Einrastgruppen 12, 14 im ersten Ausführungsbeispiel durch zwei sich im Wesentlichen in Axialrichtung erstreckende Doppelarme 16 ausgebildet, wobei jeweils der eine Endbereich 18 jedes Doppelarms 16 der ersten Einrastgruppe 12 und der andere Endbereiche 20 der zweiten Einrastgruppe 14 zugeordnet ist.

Wie insbesondere in Fig. 2 gezeigt, weist im ersten Ausführungsbeispiel jeder Endbereich 18, 20 der Doppelarme 16 einen Federarm 22 mit einem am freiliegenden Ende des Federarms 22 ausgebildeten Einrastelement 24 auf. Dieses Einrastelement 24 ist als eine radial vorspringende Rastnase ausgebildet. Der freie Endbereich jedes Federarms 22 mit dem Einrastelement 24 verjüngen sich in Richtung des frei liegenden Endes derart, dass das Einführen des Verbindungselements 10 in eine an einem Gehäuse 40, 42 ausgebildete Aufnahmeöffnung 44 ermöglicht beziehungsweise erleichtert wird.

In einem Mittenbereich 26 sind die Doppelarme 16 jeweils radial verdickt ausgebildet und weisen an diesem Mittenbereich 26 je zwei im wesentlichen rechtwinklig zur Axialrichtung A ausgerichtete Anschlagflächen 28 auf.

Die beiden Doppelarme 16 sind über ein ein Gelenk 30 bildendes Scharnier 32 miteinander verbunden. Wie in Fig. 1 gezeigt, verläuft die Scharnierachse S des Scharniers 32 im Wesentlichen rechtwinklig zur Axialrichtung A und im Wesentlichen rechtwinklig zur Auslenkrichtung R der Federarme 22. Mithilfe des Scharniers 32 kann, wie weiter unten ausgeführt, die Montage zweier Installationsgeräte, welche mittels der erfindungsgemässen Verbindungselemente miteinander verbunden werden, vereinfacht werden.

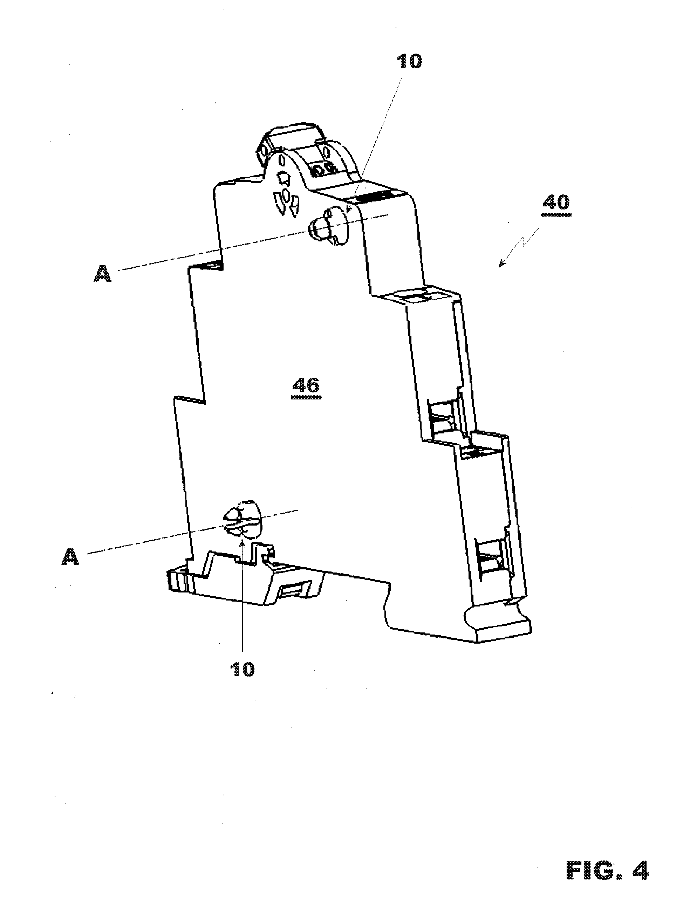

Das Scharnier 32 ist bevorzugt als ein Falzscharnier oder in ähnlicher Art und Weise ausgebildet. Das Scharnier ist durch einen zwischen den Mittenbereichen 26 der beiden Doppelarme 16 ausgebildeten Steg 32' realisiert. Die Stärke in Axialrichtung A dieses Stegs 32' ist derart gewählt, dass eine der beiden Einrastgruppen 12, 14 zwecks Einführung des Verbindungselements 10 in das erste der beiden Installationsgeräte 40 mit einem vergleichsweise geringen Kraftaufwand eingeführt werden kann. Wie in Fig. 3 gezeigt, lässt sich hierzu das Scharnier 32 elastisch auslenken, sodass nach dem radialen Zusammendrücken der Federarme 22 der ersten Einrastgruppe 12, wodurch die Federarme 22 der zweiten Einrastgruppe 14 radial aufgespreizt werden, sich das Verbindungselement 10 wieder in die in Fig. 2 und 4 gezeigte Ausgangsposition elastisch zurück bewegt, in welcher die einzelnen Federarme 22 im Wesentlichen parallel zur Axialrichtung A ausgerichtete sind.

Das Gelenk 30 des erfindungsgemässen Verbindungselements 10 ist bevorzugt aus einem Thermoplasten gefertigt, welcher gut elastisch verformbar ist. Dank der im Vergleich zur Dicke des Stegs 32' sehr langen Länge in Scharnierachsenrichtung S, wird das Scharnier 32 nur um die Scharnierachse S herum ausgelenkt, jedoch nicht rechtwinklig zur Scharnierachse S zusammengedrückt.

Wie das Gelenk 30 kann insbesondere das ganze Verbindungselement 10 aus einem Thermoplasten, wie beispielsweise Polypropylen, gefertigt werden.

Das in Fig. 3, 5-6 teilweise im Schnitt und in Fig. 4 in Ansicht gezeigte Gehäuse 40 des Installationsgeräts weist zumindest in einer seiner beiden Seitenflächen 46 zwei Aufnahmeöffnungen 44 (in Fig. 3, 5-6 ist lediglich eine dargestellt) für die erfindungsgemässen Verbindungselemente 10 auf. Selbstverständlich können auch eine oder mehrere Aufnahmeöffnungen 44 vorhanden sein.

Die Gehäuse 40, 42 der miteinander zu verbindenden Installationsgeräte weisen zumindest eine ähnliche äussere Form auf, insbesondere weisen die miteinander zu verbindenden Gehäuse 40, 42 ähnliche oder miteinander kompatible Seitenflächen 46 auf. Hingegen können Gehäuse 40, 42 mit einer ähnlichen äusseren Form unterschiedliche Breiten aufweisen. Weiter können auch die die beiden Seitenflächen verbindenden Flächen unterschiedlich ausgebildet sein. Weiter können die miteinander zu verbindenden Installationsgeräte zur Ausführung unterschiedlicher Funktionen ausgebildet sein. Beispielsweise kann das eine der beiden zu verbindenden Installationsgeräte als ein Relais und das andere Installationsgerät ein Fehlerstromschutzschalter sein. Weiter kann beispielsweise auch ein drittes als Schaltkontakt für eine weitere Phase ausgebildetes Installationsgerät an die bereits miteinander verbundenen Installationsgeräte angebaut werden.

Die Aufnahmeöffnungen 44 in den beiden Seitenflächen 46 der Gehäuse 40, 42 der miteinander zu verbindenden Installationsgeräte sind vorteilhafter derart angeordnet, dass diese, falls die zu verbindenden Gehäuse 40, 42 seitlich aufeinander ausgerichtet sind, deckungsgleich angeordnet sind. Die Gehäuse 40, 42 können je nur in einer Seitenfläche 46 oder in beiden Seitenflächen 46 Aufnahmeöffnungen 44 aufweisen. Weiter können die Aufnahmeöffnungen 44 in den beiden Seitenflächen 46 jedes Gehäuses 40, 42 aufeinander ausgerichtet sein, sodass das zweite Gehäuse 42 entweder auf der einen Seite des ersten Gehäuses 40 oder auf der anderen Seite des ersten Gehäuses 40 mittels der Verbindungselemente 10 angeordnet werden kann. Es kann jedoch auch vorteilhaft sein, die Aufnahmeöffnungen 44 in den beiden Seitenflächen 46 jedes Gehäuses 40, 42 nicht aufeinander auszurichten beziehungsweise zueinander versetzt anzuordnen, sodass das zweite Gehäuse 42 nur auf einer Seite des ersten Gehäuses 40 angeordnet werden kann. So kann zum Beispiel an die eine Seite des ersten Gehäuses 40 nur ein Gehäuse eines Installationsgeräts eines ersten Typs und an die andere Seite des ersten Gehäuses 40 nur ein Gehäuse eines Installationsgeräts eines zweiten Typs angeordnet sein. Die beiden Typen von Installationsgeräten unterscheiden sich insbesondere durch die Anordnung der Aufnahmeöffnungen 44 in den Seitenflächen 46 ihrer Gehäuse.

Im weiteren ist das Verbinden zweier Installationsgeräte beschrieben. Das Verbinden ist für je eine Aufnahmeöffnung 44 pro Gehäuse 40, 42 und für ein Verbindungselement 10 beschrieben. Die Verallgemeinerung auf mehrere Aufnahmeöffnungen pro Installationsgerät und auf dementsprechend mehrere Verbindungselemente 10 sei hiermit mitoffenbart.

Zum Verbinden zweier Gehäuse 40, 42 wird wie folgt vorgegangen. Wie in Fig. 3 dargestellt, wird zunächst das Verbindungselement 10 mit der ersten Einrastgruppe 12 voraus mit einem verhältnismässig geringen Kraftaufwand in die dafür am Gehäuse 40 des ersten Installationsgeräts vorhandene Ausnahmeöffnungen 44 eingeführt. Beim Einführen des Verbindungselements 10 werden dessen Federarme 22 der ersten Einrastgruppe 12 radial zusammengedrückt, wodurch die Federarme 22 der zweiten Einrastgruppe 14 radial ausgelenkt werden. Bei diesem Einführen der ersten Einrastgruppe 12 in die Aufnahmeöffnung 44 werden die Doppelarme 16 im Wesentlichen nicht elastisch verformt. Die Auslenkung der beiden Doppelarme 16 zueinander wird mittels des Gelenks 30 zwischen den Doppelarmen 16 bewerkstelligt.

Das Verbindungselement 10 wird derart in das Gehäuse 40 des ersten Installationsgeräts eingeführt, dass die Einrastelemente 24 in Einführrichtung des Verbindungselements hinter einem Rücksprung 48 am Gehäuse 40 des ersten Installationsgeräts zu liegen kommen, sodass sich die Federarme 22 der ersten Einrastgruppe 12 wieder radial Auffächern können und das Verbindungselement 10 am Gehäuse 40 des ersten Installationsgeräts gehalten ist.

Durch den Rücksprung 48 am Gehäuse 40 ist in diesem Ausführungsbeispiel ein Gegenelement zum Einrastelement 24 ausgebildet. Selbstverständlich können das durch die Rastnase ausgebildete Einrastelement 24 und das durch den Rücksprung 48 am Gehäuse 40 ausgebildete Gegenelement zur Rastnase auch auf eine andere Weise ausgebildet sein. Beispielsweise kann die Rastnase eine abgerundete Form und das am Gehäuse ausgebildete Gegenelement eine dazu entsprechend Form aufweisen. Weiter ist es auch möglich, das Einrastelement durch eine Nut auszubilden und das Gegenelement durch eine vom Gehäuse in die Gehäuseöffnung 44 vorstehende Nase auszubilden.

Durch das Auffächern der Federarme 22 der ersten Einrastgruppe 12 werden die Federarme 22 der zweiten Einrastgruppe 14 wieder etwas radial zusammengezogen. Das Auffächern der Federarme 22 der ersten Einrastgruppe 12 erfolgt unter der Vorspannung des Gelenks 30 oder durch - falls die Vorspannung des Gelenks 30 hierzu nicht ausreichen sollte - durch ein radiales zusammendrücken der Federarme 22 der zweiten Einrastgruppe 14.

Zur Montage des Gehäuses 42 des zweiten Installationsgeräts an das Gehäuse 40 des erste Installationsgeräts wird in einem darauffolgenden Schritt das zweite Installationsgerät an die Seite des ersten Installationsgerätes gepresst, in welche die Verbindungselemente 10 eingesetzt sind. Durch das Zusammenpressen der beiden Gehäuse 40, 42 der Installationsgeräte wird jeder einzelne Doppelarm 16 derart elastisch ausgelenkt, dass die Doppelarme 16 im Bereich der zweiten Einrastgruppe 14 radial zusammengedrückt werden. Dabei wird das Gelenk 30 im Vergleich zum Einführen der ersten Einrastgruppe 12 in die Aufnahmeöffnung 44 am Gehäuse 40 des ersten Installationsgerätes nur gering ausgelenkt. Sobald die beiden Gehäuse 40, 42 aneinander anliegen oder in einem vorgebbaren Abstand beabstandet sind, spreizen sich die Doppelarme 16 im Bereich der zweiten Einrastgruppe 14 wieder auf und die Einrastelemente 24 der zweiten Einrastgruppe 14 greifen hinter den Rücksprung 48 am Gehäuse 42 des zweiten Installationsgeräts, wodurch das zweite Installationsgerät fest am ersten Installationsgerät gehalten ist.

Da beim Zusammenpressen der beiden Installationsgeräte bereits die Verbindungselemente im Gehäuse 40 des ersten Installationsgerätes verankert sind und sich folglich die Federarme 22 der ersten Einrastgruppe 12 nicht mehr oder nur sehr gering radial aufspreizen können, werden die Doppelarme 16 elastisch verformt. Diese elastische Verformung der Doppelarme 16 benötigt wesentlich mehr Kraft als das Auslenken der Doppelarme 16 über das Gelenk 30. Da die beiden zusammenzupressenden Installationsgeräte gut handhabbar sind, bereitet dieser wesentlich grössere Kraftaufwand keine Schwierigkeiten. Folglich kann mittels des erfindungsgemässen Verbindungselements 10 das Verbinden zweier Installationsgeräte beziehungsweise das Verbinden der Gehäuse zweier Installationsgeräte im Vergleich zum Stand der Technik wesentlich vereinfacht werden, da die Doppelarme nur einmal elastisch verformt werden und folglich der Kraftaufwand zum elastischen Verformen der Doppelarme nur einmal aufgewendet werden muss. Da das Verbindungselement 10 mit den Doppelarmen 16 zum Zeitpunkt der elastischen Verformung der Doppelarme bereits in das Gehäuse 40 des ersten Installationsgerätes eingesetzt ist, kann die zum Verformen der Doppelarme 16 notwendige Kraft gut gehandhabt werden.

Selbstverständlich können mittels der erfindungsgemässen Verbindungselemente nicht nur zwei aneinander angereihte Installationsgeräte miteinander verbunden werden, sondern eine Vielzahl von Installationsgeräten. Insbesondere kann durch das Verbinden mehrerer einphasig ausgebildeter Installationsgeräte ein mehrphasig ausgebildetes Installationsgerät ausgebildet werden.

In einer zweiten, in den Figuren nicht dargestellten Ausführungsform weist das Verbindungselement 10 drei Doppelarme 16 auf. Die Doppelarme 16 sind im Wesentlichen gleich ausgebildet wie im ersten Ausführungsbeispiel, jedoch ist jeder Doppelarm im Vergleich zum ersten Ausführungsbeispiel in Umfangsrichtung bezüglich der Axialrichtung A kürzer ausgebildet. Die Doppelarme des zweiten Ausführungsbeispiels weisen in Umfangsrichtung eine Länge von etwa 120° auf. Die Doppelarme des ersten Ausführungsbeispiel weisen im Gegensatz dazu in Umfangsrichtung eine Länge von etwa 180° auf.

Anstelle dieses kugelförmiges Gelenks 30 kann auch ein Zentrumskörper verwendet werden, der mit jedem der drei Doppelarme 16 über ein im Wesentlichen zum Scharnier 32 des ersten Ausführungsbeispiels analoges Scharnier verbunden ist.

In weiteren, nicht dargestellten Ausführungsformen weist das Verbindungselement beispielsweise vier oder mehrere Doppelarme auf, die analog zum ersten oder zweiten Ausführungsform über ein Scharnier miteinander verbunden sind.

Die Montage zweier Installationsgeräte mit Verbindungselementen gemäss der zweiten oder weiteren Ausführungsform erfolgt analog zur Montage der Installationsgeräte mittels Verbindungselementen gemäss der ersten Ausführungsform.

### Bezugszeichenliste

- 10: Verbindungselement
- 12: (erste )Einrastgruppe
- 14: (zweite) Einrastgruppe
- 16: Doppelarm
- 18: (eine) Endbereich
- 20: (andere) Endbereich
- 22: Federarm
- 24: Einrastelement
- 26: Mittenbereich
- 28: Anschlagfläche
- 30: Gelenk
- 32: Scharnier
- 32': Steg
- 40: Gehäuse des (erstes) Installationsgeräts
- 42: Gehäuse des (zweiten) Installationsgeräts
- 44: Aufnahmeöffnung
- 46: Seitenfläche
- 48: Rücksprung am Gehäuse

- A: Axialrichtung
- R: Radialrichtung
- S: Scharnierachse

## Patentansprüche

1. Verbindungselement (10) zum Verbinden zweier nebeneinander angereihter, mit ihren Seitenflächen (46) aneinander benachbarter Installationsgeräte, insbesondere Niederspannungsschaltgeräte wie Reiheneinbaugeräte, Leitungsschutzschalter oder Fehlerstromschutzschalter, wobei das Verbindungselement (10) sich in Axialrichtung (A) erstreckt und zwei Endbereiche (18, 20) aufweist, die sich einander in Axialrichtung (A) gegenüber liegen, und wobei das Verbindungselement (10) zumindest zwei zumindest annähernd in Axialrichtung (A) des Verbindungselements (10) verlaufende Doppelarme (16) aufweist, wobei von jedem Doppelarm (16) der eine in Axialrichtung (A) liegende Endbereich (18) dazu bestimmt ist, in ein Gehäuse (40) des einen Installationsgeräts eingeführt zu werden, und der andere Endbereich (20) des Doppelarmes (16) dazu bestimmt ist, in ein Gehäuse (42) des benachbarten Installationsgeräts eingeführt zu werden, und die Endbereiche (18, 20) der Doppelarme (16), die dazu bestimmt sind, in dasselbe Gehäuse (40, z eines der Installationsgerät eingeführt zu werden, zusammen eine ein Einrastelement (24) aufweisende Einrastgruppe (12, 14) bilden, welche mit einem am jeweiligen Gehäuse (40, 42) ausgebildeten Gegenelement (48) zusammen wirken, um die nebeneinander angeordneten Installationsgeräte miteinander zu verbinden, wobei die Doppelarme (16) des Verbindungselements (10) zwischen den in Axialrichtung (A) liegenden Enden über ein Gelenk (30) miteinander verbunden sind und wobei jeder Endbereich (18, 20) des Doppelarms (16) einen Federarm (22) mit einem am freiliegenden Ende des Federarms (22) ausgebildeten Einrastelement (24) aufweist, **dadurch gekennzeichnet, dass**
das Gelenk (30) ein Scharnier (32), insbesondere ein Falzscharnier, ist, welches elastisch auslenkbar ist und dessen Achse (S) im wesentlichen rechtwinklig zur Auslenkebene der Federarme verläuft.

2. Verbindungselement gemäss Anspruch 1, **dadurch gekennzeichnet, dass** das Gelenk (30) aus thermoplastischem Material gefertigt ist.

3. Verbindungselement gemäss einem der Ansprüche 1 oder 2, **dadurch gekennzeichnet, dass** die Doppelarme (16) aus thermoplastischem Material gefertigt sind.

4. Verbindungselement gemäss Anspruch 2 oder 3, **dadurch gekennzeichnet, dass** das thermoplastische Material Polypropylen oder ein Werkstoff auf Polypropylenbasis ist.

5. Verbindungselement gemäss einem der Ansprüche 1 bis 4, **dadurch gekennzeichnet, dass** jeder Doppelarm (16) jeweils endseitig einen Federarm (22) aufweist, der bezüglich der Axialrichtung (A) radial elastisch auslenkbar ist.

6. Verbindungselement gemäss Anspruch 5, durch gekennzeichnet, dass zumindest einer der Federarm (22) jeder Einrastgruppe (14, 16) an seinem freien Ende eine radial vorspringendes Rastnase (24) aufweist, durch welche das Einrastelement (24) ausgebildet ist, wobei die Rastnase (24) im montierten Zustand des Verbindungselements an einem Gehäuse (40, 42) des Installationsgeräts hinter einem Rücksprung (48) des Gehäuses (40, 42) einrastet.

7. Verbindungselement gemäss einem der Ansprüche 1 bis 6, **dadurch gekennzeichnet, dass** das Verbindungselement (10) vorzugsweise eine gerade Anzahl von Doppelarmen (16) aufweist und jeder Doppelarm (16) zumindest teilweise rechtwinklig zur Scharnierachse (S) auslenkbar ist.

8. Verbindungselement gemäss Anspruch 7, **dadurch gekennzeichnet, dass** das Verbindungselement (10) genau zwei Doppelarme (16) aufweist.

9. Eine Mehrzahl nebeneinander angereihter, mit ihren Seitenflächen (46) einander benachbarter Installationsgeräte, insbesondere Niederspannungsschaltgeräte wie Reiheneinbaugeräte, Leitungsschutzschalter oder Fehlerstromschutzschalter, wobei die jeweils einander benachbarten Installationsgeräte mittels eines Verbindungselements (10) miteinander verbunden sind, wobei das Verbindungselement (10) sich in Axialrichtung (A) erstreckt und zwei Endbereiche (18, 20) aufweist, die sich einander in Axialrichtung (A) gegenüber liegen, und wobei das Verbindungselement (10) zumindest zwei zumindest annähernd in Axialrichtung (A) des Verbindungselements (10) verlaufende Doppelarme (16) aufweist, wobei von jedem Doppelarm (16) der eine in Axialrichtung (A) liegende Endbereich (18) in ein Gehäuse (40) der einander benachbarter Installationsgeräte eingeführt ist, und der andere Endbereich (20) des Doppelarmes (16) in ein Gehäuse (42) des anderen der einander benachbarten Installationsgeräte eingeführt ist, und die Endbereiche (18, 20) der Doppelarme (16), die in dasselbe Gehäuse (40, 42) eines der beiden Installationsgerät eingeführt sind, zusammen eine ein Einrastelement (24) aufweisende Einrastgruppe (12, 14) bilden, welche mit einem am jeweiligen Gehäuse (40, 42) ausgebildeten Gegenelement (48) zusammen wirken, um die aneinander anliegenden Installationsgeräte miteinander zu verbinden, wobei die Doppelarme (16) des Verbindungselements (10) zwischen den in Axialrichtung (A) liegenden Enden über ein Gelenk (30) miteinander verbunden sind und wobei jeder Endbereich (18, 20) des Doppelarms (16) einen Federarm (22) mit einem am freiliegenden Ende des Federarms (22) ausgebildeten Einrastelement (24) aufweist, **dadurch gekennzeichnet, dass**
das Gelenk (30) ein Scharnier (32), insbesondere ein Falzscharnier, ist, welches elastisch auslenkbar ist und dessen Achse (S) im wesentlichen rechtwinklig zur Auslenkebene der Federarme verläuft.

10. Installationsgerät gemäss Anspruch 9, **gekennzeichnet durch** die Ausbildung des Verbindungselements (10) nach einem der Ansprüche 2 bis 8.

11. Installationsgerät gemäss einem der Ansprüche 9 oder 10, **dadurch gekennzeichnet, dass** die benachbarten Gehäuse (40, 42) Aufnahmeöffnungen (44) zum Aufnehmen der Endbereiche (18, 20) des Verbindungselements aufweist.

12. Installationsgerät gemäss Anspruch 11, **dadurch gekennzeichnet, dass** jedes Installationsgerät in seinen beiden Seitenflächen (46) eine Aufnahmeöffnung (44) aufweist und diese Aufnahmeöffnungen (44) aufeinander ausgerichtet sind.

13. Installationsgerät gemäss Anspruch 11, **dadurch gekennzeichnet, dass** jedes Installationsgerät in seinen beiden Seitenflächen (46) eine Aufnahmeöffnung (44) aufweist und diese Aufnahmeöffnungen (44) zueinander versetzt sind.

## Claims

1. Connecting element (10) for connecting two installation devices which are lined up next to one another with their side faces (46) adjacent to one another, in particular low-voltage switching devices such as rail-mounted devices, line circuit breakers or residual current devices, wherein the connecting element (10) extends in the axial direction (A) and has two end regions (18, 20) which are situated opposite one another in an axial direction (A), and wherein the connecting element (10) has at least two twin arms (16) which run at least approximately in the axial direction (A) of the connecting element (10), wherein one end region (18), which is situated in the axial direction (A), of each twin arm (16) is intended to be inserted into a housing (40) of one installation device, and the other end region (20) of the twin arm (16) is intended to be inserted into a housing (42) of the adjacent installation device, and the end regions (18, 20) of the twin arms (16), which are intended to be inserted into the same housing (40, 42) of one of the installation devices, together form a latching group (12, 14) which has a latching element (24) and interacts with a mating element (48) which is formed on the respective housing (40, 42), in order to connect the installation devices, which are arranged next to one another, to one another, wherein the twin arms (16) of the connecting element (10) are connected to one another by means of a joint (30) between the ends which are situated in the axial direction (A), and wherein each end region (18, 20) of the twin arm (16) has a spring arm (22) with a latching element (24) which is formed at the exposed end of the spring arm (22), **characterized in that** the joint (30) is a hinge (32), in particular a folding hinge, which can be deflected in an elastic manner and of which the axis (S) runs substantially at a right angle to the deflection plane of the spring arms.

2. Connecting element according to Claim 1, **characterized in that** the joint (30) is produced from thermoplastic material.

3. Connecting element according to either of Claims 1 and 2, **characterized in that** the twin arms (16) are produced from thermoplastic material.

4. Connecting element according to Claim 2 or 3, **characterized in that** the thermoplastic material is polypropylene or a material based on polypropylene.

5. Connecting element according to one of Claims 1 to 4, **characterized in that** each twin arm (16) has, in each case at the end, a spring arm (22) which can be deflected in a radially elastic manner in relation to the axial direction (A).

6. Connecting element according to Claim 5, **characterized in that** at least one of the spring arms (22) of each latching group (14, 16) has a radially projecting latching lug (24) at its free end, the latching element (24) being formed by the said latching lug, wherein the latching lug (24) latches behind a recess (48) in the housing (40, 42) when the connecting element is mounted on a housing (40, 42) of the installation device.

7. Connecting element according to one of Claims 1 to 6, **characterized in that** the connecting element (10) preferably has an even number of twin arms (16), and each twin arm (16) can be deflected at least partially at a right angle to the hinge axis (S).

8. Connecting element according to Claim 7, **characterized in that** the connecting element (10) has precisely two twin arms (16).

9. A plurality of installation devices which are lined up next to one another with their side faces (46) adjacent to one another, in particular low-voltage switching devices such as rail-mounted devices, line circuit breakers or residual current devices, wherein the installation devices which are adjacent to one another in each case are connected to one another by means of a connecting element (10), wherein the connecting element (10) extends in an axial direction (A) and has two end regions (18, 20) which are situated opposite one another in the axial direction (A), and wherein the connecting element (10) has at least two twin arms (16) which run at least approximately in the axial direction (A) of the connecting element (10), wherein one end region (18), which is situated in the axial direction (A), of each twin arm (16) is inserted into one housing (40) of the installation devices which are adjacent to one another, and the other end region (20) of the twin arm (16) is inserted into a housing (42) of the other of the installation devices which are adjacent to one another, and the end regions (18, 20) of the twin arms (16), which are inserted into the same housing (40, 42) of one of the two installation devices, together form a latching group (12, 14) which has a latching element (24) and interacts with a mating element (48) which is formed on the respective housing (40, 42), in order to connect the installation devices, which are situated against one another, to one another, wherein the twin arms (16) of the connecting element (10) are connected to one another by means of a joint (30) between the ends which are situated in the axial direction (A), and wherein each end region (18, 20) of the twin arm (16) has a spring arm (22) with a latching element (24) which is formed at the exposed end of the spring arm (22), **characterized in that** the joint (30) is a hinge (32), in particular a folding hinge, which can be deflected in an elastic manner and of which the axis (S) runs substantially at a right angle to the deflection plane of the spring arms.

10. Installation device according to Claim 9, **characterized by** the design of the connecting element (10) according to one of Claims 2 to 8.

11. Installation device according to either of Claims 9 and 10, **characterized in that** the adjacent housings (40, 42) have receiving openings (44) for receiving the end regions (18, 20) of the connecting element.

12. Installation device according to Claim 11, **characterized in that** each installation device has a receiving opening (44) in its two side faces (46), and these receiving openings (44) are oriented toward one another.

13. Installation device according to Claim 11, **characterized in that** each installation device has a receiving opening (44) in its two side faces (46), and these receiving openings (44) are offset in relation to one another.

## Revendications

1. Elément de liaison (10) qui relie deux appareils d'installation voisins l'un de l'autre par leurs surfaces latérales (46), notamment des appareils de commutation à basse tension, par exemple des appareils à montage en rangée, des commutateurs de protection de conducteurs ou des commutateurs de protection contre les courants vagabonds,
l'élément de liaison (10) s'étendant dans la direction axiale (A) et présentant deux parties d'extrémité (18, 20) opposées l'une à l'autre dans la direction axiale (A),
l'élément de liaison (10) présentant au moins deux bras doubles (16) qui s'étendent au moins approximativement dans la direction axiale (A) de l'élément de liaison (10),
une partie d'extrémité (18) de chaque bras double (16) située dans la direction axiale (A) étant conçue pour être insérée dans un boîtier (40) d'un appareil d'installation, l'autre partie d'extrémité (20) du bras double (16) étant conçue pour être insérée dans le boîtier (42) de l'appareil d'installation voisin et les parties d'extrémité (18, 20) des bras doubles (16) conçues pour être insérées dans le même boîtier (40, 42) de l'un des appareils d'installation formant ensemble un groupe d'encliquetage (12, 14) qui présente un élément d'encliquetage (24) et qui coopère avec un élément complémentaire (48) configuré sur chaque boîtier (40, 42) pour relier l'un à l'autre les appareils d'installation disposés l'un à côté de l'autre,
les bras doubles (16) de l'élément de liaison (10) étant reliés l'un à l'autre par une articulation (30) entre les extrémités situées dans la direction axiale (A),
chaque partie d'extrémité (18, 20) du bras double (16) présentant un bras élastique (22) doté d'un élément d'encliquetage (24) formé sur l'extrémité libre du bras élastique (22),
**caractérisé en ce que**
l'articulation (30) est une charnière (32), en particulier une charnière en pli, extensible élastiquement et dont l'axe (S) s'étend essentiellement à la perpendiculaire du plan de déploiement des bras élastiques.

2. Elément de liaison selon la revendication 1, **caractérisé en ce que** l'articulation (30) est réalisée en un matériau thermoplastique.

3. Elément de liaison selon l'une des revendications 1 ou 2, **caractérisé en ce que** les bras doubles (16) sont réalisés en un matériau thermoplastique.

4. Elément de liaison selon les revendications 2 ou 3, **caractérisé en ce que** le matériau thermoplastique est le polypropylène ou un matériau à base de polypropylène.

5. Elément de liaison selon l'une des revendications 1 à 4, **caractérisé en ce que** chaque bras double (16) présente à son extrémité un bras élastique (22) déformable élastiquement dans la direction radiale par rapport à la direction axiale (A).

6. Elément de liaison selon la revendication 5, **caractérisé en ce qu'**au moins l'un des bras élastiques (22) de chaque groupe d'encliquetage (14, 16) présente à son extrémité libre un bec d'encliquetage (24) en saillie radiale par lequel l'élément d'encliquetage (24) est formé, s'encliquetant sur un boîtier (40, 42) de l'appareil d'installation en arrière d'une saillie arrière (48) du boîtier (40, 42) lorsque l'élément de liaison est en position montée.

7. Elément de liaison selon l'une des revendications 1 à 6, **caractérisé en ce que** l'élément de liaison (10) présente de préférence un nombre pair de bras doubles (16) et **en ce que** chaque bras double (16) peut être déformé au moins en partie perpendiculairement à l'axe (S) de la charnière.

8. Elément de liaison selon la revendication 7, **caractérisé en ce que** l'élément de liaison (10) présente exactement deux bras doubles (16).

9. Ensemble constitué de plusieurs appareils d'installation rangés les uns à côté des autres et voisins les uns des autres par leurs surfaces latérales (46), en particulier appareil de commutation à basse tension tel que appareil à montage en rangée, commutateur de protection de conducteur ou commutateur de protection contre les courants vagabonds, les appareils d'installation voisins les uns des autres étant reliés les uns aux autres au moyen d'un élément de liaison (10), l'élément de liaison (10) s'étendant dans la direction axiale (A) et présentant deux parties d'extrémité (18, 20) opposées l'une à l'autre dans la direction axiale (A),
l'élément de liaison (10) présentant au moins deux bras doubles (16) qui s'étendent au moins approximativement dans la direction axiale (A) de l'élément de liaison (10),
une partie d'extrémité (18) de chaque bras double (16) située dans la direction axiale (A) étant conçue pour être insérée dans un boîtier (40) d'un appareil d'installation, l'autre partie d'extrémité (20) du bras double (16) étant conçue pour être insérée dans le boîtier (42) de l'appareil d'installation voisin et les parties d'extrémité (18, 20) des bras doubles (16) conçues pour être insérées dans le même boîtier (40, 42) de l'un des deux appareils d'installation formant ensemble un groupe d'encliquetage (12, 14) qui présente un élément d'encliquetage (24) et qui coopère avec un élément complémentaire (48) configuré sur chaque boîtier (40, 42) pour relier l'un à l'autre les appareils d'installation disposés l'un à côté de l'autre,
les bras doubles (16) de l'élément de liaison (10) étant reliés l'un à l'autre par une articulation (30) entre les extrémités situées dans la direction axiale (A),
chaque partie d'extrémité (18, 20) du bras double (16) présentant un bras élastique (22) doté d'un élément d'encliquetage (24) formé sur l'extrémité libre du bras élastique (22),
**caractérisé en ce que**
l'articulation (30) est une charnière (32), en particulier une charnière en pli, extensible élastiquement et dont l'axe (S) s'étend essentiellement à la perpendiculaire du plan de déploiement des bras élastiques.

10. Appareil d'installation selon la revendication 9, **caractérisé en ce que** l'élément de liaison (10) est configuré selon l'une des revendications 2 à 8.

11. Appareil d'installation selon l'une des revendications 9 ou 10, **caractérisé en ce que** les boîtiers (40, 42) voisins présentent des ouvertures de réception (44) qui permettent de reprendre les parties d'extrémité (18, 20) de l'élément de liaison.

12. Appareil d'installation selon la revendication 11, **caractérisé en ce que** chaque appareil d'installation présente une ouverture de reprise (44) dans ses deux surfaces latérales (46) et **en ce que** ces ouvertures de reprise (44) sont alignées l'une sur l'autre.

13. Appareil d'installation selon la revendication 11, **caractérisé en ce que** chaque appareil d'installation présente une ouverture de reprise (44) dans ses deux surfaces latérales (46) et **en ce que** ces ouvertures de reprise (44) sont décalées l'une par rapport à l'autre.
